# EUROPÄISCHE PATENTSCHRIFT

(11) **EP 3 914 467 B1**
(45) Veröffentlichungstag und Bekanntmachung des Hinweises auf die Patenterteilung: **22.11.2023**
(21) Anmeldenummer: 19827607.3
(22) Anmeldetag: 11.12.2019
(51) Int. Cl.: H02K 7/102, F16D 65/18, F16D 65/40, F16D 65/50, F16D 125/34

(54) **RADNABENANTRIEB FÜR EIN FAHRZEUG**
WHEEL HUB DRIVE FOR A VEHICLE
ENTRAÎNEMENT DU MOYEU DE ROUE D'UN VÉHICULE

(30) Priorität: 25.01.2019 DE 102019101818
(43) Veröffentlichungstag der Anmeldung: 01.12.2021
(73) Patentinhaber: Schaeffler Technologies AG & Co. KG, 91074 Herzogenaurach (DE)
(72) Erfinder: GRAUSS, Aurelien, 67670 Mommenheim (FR); WAGNER, Philippe, 67460 Souffelweyersheim (FR); ORTMANN, Simon, 76532 Baden-Baden (DE)
(86) Internationale Anmeldenummer: PCT/DE2019/101071
(87) Internationale Veröffentlichungsnummer: WO 2020/151777

(56) Entgegenhaltungen:
- WO-A1-2017/179670
- DE-A1- 10 225 038
- DE-A1-102013 202 809
- JP-A- 2005 263 140
- US-A1- 2009 277 727

## Beschreibung

Die Erfindung betrifft einen Radnabenantrieb für ein Fahrzeug mit den Merkmalen des Oberbegriffs des Anspruchs 1. Die Erfindung betrifft des Weiteren eine Achsanordnung mit derartigen Radnabenantrieben.

Radnabenantriebe weisen jeweils einen Elektromotor auf und dienen zum radselektiven Antrieb eines Fahrzeugs. Üblicherweise sind pro Achse des Fahrzeugs zwei derartige Radnabenantriebe verbaut. Die Hauptfunktion derartiger Radnabenantriebe ist die Bereitstellung eines Antriebsmoments für das Fahrzeug. In vielen Fahrzeugsituationen muss das Fahrzeug jedoch nicht nur angetrieben, sondern auch abgebremst werden. Hierzu weisen Radnabenantriebe ergänzend Bremsen auf, welche bei manchen Ausführungsformen in den Radnabenantrieben integriert sind.

Die Druckschrift DE 101 31 817 A1 offenbart einen Radnabenantrieb mit einer pneumatisch betätigten Bremse und einem Elektromotor, wobei die Bremse eine Lamellenbremse ist, deren Bremslamellen zwischen einer Druckplatte und einer Stützplatte axial verschiebbar angeordnet sind, und wobei mindestens ein Pneumatikkolben und mindestens ein Federspeicherkolben auf die Druckplatte wirken und unabhängig voneinander angesteuert werden können. Aus der aus der US 2009/277727 A1 ist ein Radnabenantrieb nach dem Oberbegriff des Anspruchs 1 offenbart. Weiterer Stand der Technik ist aus der JP 2005 263140 A, der DE 10 2013 202809 A1, der WO 2017/179670 A1 sowie der DE 102 25 038 A1 bekannt.

Es ist Aufgabe der vorliegenden Erfindung, einen Radnabenantrieb für ein Fahrzeug vorzuschlagen, welcher sich durch eine einfache und robuste Feststellbremse auszeichnet.

Diese Aufgabe wird durch einen Radnabenantrieb mit den Merkmalen des Anspruchs 1 und durch eine Achsanordnung für das Fahrzeug mit derartigen Radnabenantrieben mit den Merkmalen des Anspruchs 8 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist ein Radnabenantrieb, welche für ein Fahrzeug geeignet und/oder ausgebildet ist. Der Radnabenantrieb ist vorzugsweise als ein radselektiver Antrieb ausgebildet. Das Fahrzeug ist beispielsweise als ein Personenkraftwagen, Lastkraftwagen oder dergleichen ausgebildet. Insbesondere dient der Radnabenantrieb dazu, ein Hauptantriebsmoment für das Fahrzeug bereitzustellen. An dem Fahrzeug können beispielsweise zwei derartige Radantriebe auf einer gemeinsamen Achse oder beispielsweise vier derartige Radantriebe auf zwei Achsen verteilt angeordnet sein.

Der Radnabenantrieb weist ein Antriebsgehäuse auf. Das Antriebsgehäuse ist bevorzugt drehfest in dem Fahrzeug angeordnet und/oder anordbar. Beispielsweise ist der Radnabenantrieb gemeinsam mit einem angetriebenen Rad in dem Fahrzeug angeordnet. Insbesondere ist der Radnabenantrieb als ein Direktantrieb realisiert.

Der Radnabenantrieb weist einen Nabenabtrieb zur Kopplung mit dem angetriebenen Rad auf. Der Nabenabtrieb kann unmittelbar und/oder drehfest mit dem angetriebenen Rad verbunden sein. Alternativ hierzu kann zwischen dem Nabenabtrieb und dem angetriebenen Rad ein Getriebeabschnitt vorgesehen sein. Der Nabenabtrieb ist relativ zu dem Antriebsgehäuse rotierbar gelagert. Besonders bevorzugt ist zwischen dem Nabenabtrieb und dem Antriebsgehäuse eine Lagereinrichtung zur Lagerung des Nabenabtriebs vorgesehen. Insbesondere ist der Nabenabtrieb an dem Antriebsgehäuse gelagert.

Bevorzugt weist der Radnabenantrieb einen Elektromotor auf, wobei der Elektromotor einen Rotor und einen Stator umfasst. Der Stator ist mit dem Antriebsgehäuse drehfest verbunden, der Rotor ist mit dem Nabenabtrieb getrieblich verbunden, um ein Antriebsmoment von dem Elektromotor über den Nabenabtrieb auf das angetriebene Rad zu leiten. Beispielsweise kann der Rotor mit dem Nabenabtrieb drehfest verbunden sein. Alternativ kann zwischen dem Rotor und dem Nabenabtrieb ein weiterer Getriebeabschnitt vorgesehen sein.

Der Radnabenantrieb weist eine Radbremsvorrichtung auf, wobei die Radbremsvorrichtung zum Abbremsen des angetriebenen Rads dient. Besonders bevorzugt wirkt die Radbremsvorrichtung auf den Nabenabtrieb, so dass das Abbremsen des angetriebenen Rads über den Nabenabtrieb erfolgt. Besonders bevorzugt ist die Radbremsvorrichtung als eine mechanische und/oder reibende Radbremsvorrichtung ausgebildet, wobei das Bremsmoment über eine Reibung erzeugt wird.

Die Radbremsvorrichtung weist einen stationären Bremspartner und einen rotierenden Bremspartner auf. Insbesondere kann mindestens oder genau einer der beiden Bremspartner einen Reibbelag aufweisen. Der stationäre Bremspartner ist mit dem Antriebsgehäuse drehfest verbunden, der rotierende Bremspartner ist mit dem Nabenabtrieb getrieblich und/oder drehfest verbunden. Insbesondere ist die Radbremsvorrichtung als eine in dem Radnabenantrieb integrierte Radbremsvorrichtung ausgebildet. Besonders bevorzugt ist der stationäre und/oder der rotierende Bremspartner in axialer Richtung in Bezug auf eine Hauptachse zumindest abschnittsweise verschiebblich gelagert.

Bei einer Betätigung der Radbremsvorrichtung sind der stationäre Bremspartner und der rotierende Bremspartner relativ zueinander bewegbar und in einem Bremszustand reibschlüssig miteinander verbunden. Damit ist es möglich, durch Betätigung der Radbremsvorrichtung den Nabenabtrieb und damit das angetriebene Rad abzubremsen. Optional ergänzend kann der Elektromotor in einen Generatorbetrieb umgeschaltet werden und dadurch als Nutzbremse fungieren.

Der Radnabenantrieb weist eine Feststellbremsvorrichtung zum Feststellen des Nabenabtriebs relativ zu dem Antriebsgehäuse auf. Insbesondere nimmt die Feststellbremsvorrichtung die Funktion einer bevorzugt konventionellen/früheren Handbremseinrichtung ein. Im Speziellen ist die Feststellbremsvorrichtung als eine in dem Radnabenantrieb integrierte Feststellbremsvorrichtung ausgebildet. Besonders bevorzugt ist die Feststellbremsvorrichtung unabhängig von der Radbremsvorrichtung betätigbar.

Bei einer Betätigung der Feststellbremsvorrichtung sind der stationäre Bremspartner und der rotierende Bremspartner relativ zueinander bewegbar und in einem Feststellzustand reibschlüssig miteinander verbunden sind. Damit ist es möglich, durch Betätigung der Feststellbremsvorrichtung den Nabenabtrieb und damit das angetriebene Rad festzustellen. Somit kann zum Beispiel für ein Sichern des Fahrzeugs im Stillstand die Feststellbremsvorrichtung unabhängig von der Radbremsvorrichtung aktiviert werden und bei einer Fahrt des Fahrzeugs zum Bremsen des Fahrzeugs die Radbremsvorrichtung unabhängig von der Feststellbremsvorrichtung betätigt werden.

Bei einer Betätigung der Radbremsvorrichtung oder der Feststellbremsvorrichtung wird mindestens einer der beiden Bremspartner in axialer Richtung in Bezug auf die Hauptachse in Richtung des anderen Bremspartners verschoben, sodass der Reibschluss zwischen den beiden Bremspartner gebildet wird. Beim Lösen der Radbremsvorrichtung oder der Feststellbremsvorrichtung wird der Reibschluss zwischen den beiden Bremspartnern aufgehoben, sodass der Nabenabtrieb das Rad antreiben kann.

Im Rahmen der Erfindung wird vorgeschlagen, dass die Feststellbremsvorrichtung einen Rampenmechanismus aufweist, wobei der Rampenmechanismus zur Übertragung einer Feststellkraft auf den rotierenden und/oder stationären Bremspartner, eine Rotationsbewegung in eine Linearbewegung umwandelt. Insbesondere ist die Feststellbremsvorrichtung als ein Rotations-Linear-Wandler ausgebildet. Vorzugsweise wird durch den Rampenmechanismus eine um die Hauptachse gerichtete Rotationsbewegung in eine entlang der Hauptachse gerichtete Linearbewegung umgewandelt. Anders ausgedrückt wird eine in die Feststellbremsvorrichtung eingeleitete Rotationsbewegung in eine aus der Feststellbremsvorrichtung ausgeleitete Linearbewegung umgewandelt. Insbesondere werden die beiden Bremspartner durch die Linearbewegung relativ zueinander bewegt. Besonders bevorzugt wirken sowohl die Radbremsvorrichtung als auch die Feststellbremsvorrichtung auf den gleichen Bremspartner.

Der Vorteil der Erfindung besteht darin, dass durch den Rampenmechanismus eine einfache und robuste Umsetzung der Feststellbremsvorrichtung umgesetzt wird. Zudem kann durch den Rampenmechanismus in einfacher Weise eine Rotationsbewegung in eine Linearbewegung umgewandelt werden. Somit kann die Feststellbremsvorrichtung beispielsweise durch eine Drehbewegung aktuiert werden und die Feststellbremsvorrichtung z. B. deutlich einfacher und kostengünstiger ausgestaltet werden. Die Feststellbremsvorrichtung stellt sicher, dass das Auto beim Parken nicht wegrollt und kann beispielsweise auch als eine Notbremse dienen. Durch die zusätzliche Feststellbremsvorrichtung in dem Radnabenantrieb wird dieser um eine Funktion erweitert, die der klassischen Handbremsfunktion von konventionellen Fahrzeugen ähnelt.

Erfindungsgemäß weist der Rampenmechanismus einen stationären und einen verdrehbaren Rampenabschnitt auf. Der stationäre und/oder der verdrehbare Rampenabschnitt sind vorzugsweise ringförmig und/oder zylindrisch ausgebildet. Insbesondere sind der stationäre und der verdrehbare Rampenabschnitt koaxial und/oder konzentrisch zueinander angeordnet.

Erfindungsgemäß sind die beiden Rampenabschnitte miteinander bewegungsgekoppelt, sodass eine Rotationsbewegung des einen Rampenabschnitts zwangsläufig eine Linearbewegung des anderen Rampenabschnitts zur Folge hat.

Der stationäre Rampenabschnitt ist drehfest mit dem Antriebsgehäuse verbunden und/oder durch dieses gebildet. Insbesondere ist der stationäre Rampenabschnitt formschlüssig und/oder kraftschlüssig und/oder stoffschlüssig mit Antriebsgehäuse verbunden. Alternativ können der stationäre Rampenabschnitt und das Antriebsgehäuse fertigungstechnisch aus einem gemeinsamen Halbzeug gefertigt sein, sodass der Rampenabschnitt z.B. einstückig mit dem Antriebsgehäuse verbunden ist bzw. einen Teil des Antriebsgehäuses bildet.

Zur Umsetzung der Rotationsbewegung ist der verdrehbare Rampenabschnitt relativ zu dem stationären Rampenabschnitt um die Hauptachse verdrehbar. Bei einer Verdrehung des verdrehbaren Rampenabschnitts ist dabei die Linearbewegung zugleich über den Rampenmechanismus auf mindestens oder genau einen der beiden Rampenabschnitte übertragbar. Vorzugsweise verbleibt der stationäre Rampenabschnitt während der Verdrehung in Umlaufrichtung und/oder in axialer Richtung stationär an dem Antriebsgehäuse. Besonders bevorzugt ist der stationäre Rampenabschnitt fest mit dem Antriebsgehäuse verbunden, wobei der verdrehbare Rampenabschnitt zugleich die Rotationsbewegung und die Linearbewegung umsetzt.

Erfindungsgemäß weist einer der beiden Rampenabschnitte an seinem Innenumfang eine erste Schrägverzahnung und der andere der beiden Rampenabschnitte an seinem Außenumfang eine zweite Schrägverzahnung auf. Vorzugsweise können der stationäre und/oder der verdrehbare Rampenabschnitt als Zahnring oder Zahnkranz ausgebildet sein. Zur Bildung des Rampenmechanismus stehen die beiden Rampenabschnitte über die Schrägverzahnung miteinander in Eingriff. Insbesondere sind die erste und die zweite Schrägverzahnung durch mehrere in Umfangsrichtung in abwechselnder Anordnung verteilte und schräg zur Hauptachse verlaufende Rampen, insbesondere Stege, gebildet. Insbesondere ist der eine Rampenabschnitt in dem anderen Rampenabschnitt formschlüssig, insbesondere in radialer Richtung in Bezug auf die Hauptachse, aufgenommen. Bei der Verdrehung des verdrehbaren Rampenabschnitts werden aufgrund der Schrägverzahnung die beiden Rampenabschnitte entlang der Hauptachse relativ gegeneinander verschoben, sodass mindestens einer der beiden Rampenabschnitte in axialer Richtung bewegt wird und/oder zwangsgeführt ist.

In einer bevorzugten Weiterbildung ist vorgesehen, dass der Rampenmechanismus einen Fixierungsabschnitt aufweist, welcher zur Fixierung des stationären Rampenabschnitts an dem Antriebsgehäuse ausgebildet und/oder ausgebildet ist. Insbesondere ist der Fixierungsabschnitt als ein weiterer Zahnring und/oder Zahnkranz ausgebildet. Der Fixierungsabschnitt ist vorzugsweise koaxial und/oder konzentrisch zu mindestens dem stationären Rampenabschnitt angeordnet.

Der Fixierungsabschnitt ist an dem Antriebsgehäuse montiert. Besonders bevorzugt ist der Fixierungsabschnitt in radialer und/oder axialer Richtung und/oder in Umlaufrichtung in Bezug auf die Hauptachse formschlüssig und/oder kraftschlüssig und/oder stoffschlüssig mit dem Antriebsgehäuse verbunden. Im Speziellen weist das Antriebsgehäuse einen Gehäusedeckel auf, welcher das Antriebsgehäuse zumindest in axialer Richtung einseitig begrenzt bzw. verschließt. Bevorzugt ist der Fixierungsabschnitt bevorzugt an dem Gehäusedeckel angeordnet. Der Fixierungsabschnitt kann hierzu mindestens eine Befestigungslasche aufweisen, wobei der Fixierungsabschnitt durch mindestens ein Befestigungsmittel über die Fixierungslasche mit dem Antriebsgehäuse, insbesondere dem Gehäusedeckel, verbunden ist.

Der stationäre Rampenabschnitt und der Fixierungsabschnitt stehen jeweils über einen Geradverzahnung miteinander in Eingriff. Insbesondere ist der stationäre Rampenabschnitt über die Geradverzahnung in Umfangsrichtung zumindest drehfest auf den Fixierungsabschnitt angeordnet. Im Speziellen kann die Geradverzahnung als eine Steckverzahnung ausgebildet sein. Optional weißt der stationäre Rampenabschnitt einen radial nach außen oder innen gerichteten Bund auf, wobei der Rampenabschnitt mit dem Bund in axialer Richtung in Bezug auf die Hauptachse zwischen dem Fixierungsabschnitt und dem Antriebsgehäuse zumindest formschlüssig angeordnet ist. Somit wird sichergestellt, dass der Rampenabschnitt zusätzlich in axialer Richtung in Bezug auf die Hauptachse fixiert ist.

Es ist bevorzugt, dass die Radbremsvorrichtung einen Drucktopf aufweist, welcher zur Übertragung einer Bremskraft ausgebildet und/oder geeignet ist. Insbesondere ist der Drucktopf koaxial zu der Hauptachse angeordnet und zur Übertragung der Bremskraft in einer axialen Richtung verschiebbar. Dabei ist in axialer Richtung in Bezug auf die Hauptachse durch mindestens oder genau einen der Bremspartner und in axialer Gegenrichtung durch mindestens oder genau einen der Rampenabschnitte ein Endanschlag für den Drucktopf definiert. Insbesondere ist der Drucktopf in der axialen Richtung an dem durch den stationären oder den rotierenden Bremspartner gebildeten Endanschlag abgestützt und/oder mit diesem fest verbunden. Alternativ oder optional ergänzend ist der Drucktopf in der axialen Gegenrichtung an dem durch den verdrehbaren oder den stationären Bremspartner gebildeten Endanschlag abgestützt und/oder mit diesem fest verbunden.

Eine axiale Position des durch den Rampenabschnitt gebildeten Endanschlags ist über den Rampenmechanismus einstellbar, sodass eine Verschleißnachstellung für die Radbremsvorrichtung umgesetzt ist. Insbesondere kann der Drucktopf in der axialen Gegenrichtung mit einer Rückstellkraft, z.B. mittels einer Rückstellfeder oder einem Fluiddruck, beaufschlagt sein, wobei der Drucktopf in einem nicht-betätigten Zustand der Radbremsvorrichtung selbsttätig in Richtung des entsprechenden Endanschlags zurückgestellt wird und/oder die Radbremsvorrichtung in einem geöffneten Zustand gehalten wird. Besonders bevorzugt sind die beiden Rampenabschnitte in einem nicht-betätigen Zustand der Feststellbremsvorrichtung blockiert. Dadurch wird eine unerwünschte Bewegung zwischen den beiden Rampenabschnitten bei einer Beaufschlagung des den Endschlag bildenden Rampenabschnitts mit der Rückstellkraft verhindert. Insbesondere kann der durch den Rampenabschnitt gebildete Endanschlag in axialer Richtung in Bezug auf die Hauptachse durch die Feststellbremseinrichtung zur Verschleißnachstellung verschoben werden, um einen eventuell eingetretenen Verschleiß an dem rotierenden und/oder stationären Bremspartner auszugleichen.

In einer weiteren Konkretisierung ist vorgesehen, dass die Radbremsvorrichtung eine Radbremsbetätigungseinrichtung aufweist. Die Radbremsbetätigungseinrichtung kann beispielsweise als eine hydraulische Radbremsaktorik ausgebildet sein, welche in axialer Richtung wirkt und über den Drucktopf auf mindestens einen der beiden Bremspartner wirkt, sodass die beiden Bremspartner in axialer Richtung in Bezug auf die Hauptachse zusammengedrückt werden, um ein Bremsmoment zu erzeugen.

Es ist zudem vorgesehen, dass die Feststellbremsvorrichtung eine Feststellbetätigungseinrichtung aufweist, wobei die Feststellbetätigungseinrichtung unabhängig von der Radbremsbetätigungseinrichtung betätigbar ist. Insbesondere ist die Feststellbetätigungseinrichtung mit dem verdrehbaren Rampenabschnitt wirkverbunden, wobei die Feststellbetätigungseinrichtung zur Erzeugung der Rotationsbewegung ausgebildet und/oder geeignet ist.

Bei einer möglichen Ausgestaltung der Erfindung ist die Feststellbetätigungseinrichtung als eine manuelle Feststellbetätigungseinrichtung ausgebildet, welche beispielsweise über einen Seilzug durch einen Fahrer betätigt werden kann.

Bei einer alternativen Ausgestaltung der Erfindung weist die Feststellbetätigungseinrichtung eine Feststellaktorik, beispielsweise eine hydraulische oder elektromotorische Feststellaktorik auf, wobei die Feststellaktorik die Feststellbremsvorrichtung mit Fremdenergie betätigt. Die Feststellaktorik kann in dem Radantrieb integriert sein, alternativ kann die Feststellaktorik die Feststellbremsvorrichtung über einen Seilzug oder ein Übertragungsgetriebe betätigen.

In einer weiteren bevorzugten Ausgestaltung ist vorgesehen, dass der rotierende Bremspartner als mindestens oder genau eine axial bewegliche Bremsscheibe ausgebildet ist oder diese umfasst. Insbesondere weist der rotierende Bremspartner einen Außenträger auf, wobei die Bremsscheibe in axialer Richtung verschiebblich und in Umlaufrichtung drehfest mit dem Außenträger verbunden ist. Alternativ oder optional ergänzend ist vorgesehen, dass der stationäre Bremspartner als mindestens oder genau ein axial beweglicher Bremsbelag ausgebildet ist oder diesen umfasst. Insbesondere weist der stationäre Bremspartner einen Innenträger auf, wobei der Bremsbelag in axialer Richtung verschiebblich und in Umlaufrichtung drehfest mit dem Innenträger verbunden ist. Konstruktiv bevorzugt ist es, dass der Außenträger genau eine Bremsscheibe trägt und/oder der Innenträger genau zwei Bremsbeläge trägt, welche beidseitig zu der Bremsscheibe angeordnet sind. Es ist bevorzugt vorgesehen, dass der Drucktopf und/oder einer der beiden Rampenabschnitte, vorzugsweise der verdrehbare Rampenabschnitt, an einem der beiden Bremsbeläge abgestützt sind.

Alternativ kann die Radbremsvorrichtung als eine Lamellenbremsvorrichtung ausgebildet sein, wobei der Außenträger als ein Außenlamellenträger und der Innenträger als ein Innenlamellenträger ausgebildet ist. In dem Außenlamellenträger können eine oder mehrere Außenlamellen, vorzugsweise als die Bremsscheibe, angeordnet sein. In dem Innenlamellenträger können eine oder mehrere Innenlamellen, vorzugsweise als der Bremsbelag, angeordnet sein. Bei Betätigung der Radbremsvorrichtung wird die Bremskraft bzw. bei Betätigung der Feststellvorrichtung wird die Feststellkraft in axialer Richtung auf die Innenlamellen übertragen, so dass ein Lamellenpaket, umfassend die Innenlamellen und die Außenlamelle(n) in axialer Richtung zusammengedrückt werden, um ein Bremsmoment bzw. ein Feststellmoment zu erzeugen.

Ein weiterer Gegenstand der Erfindung betrifft eine Achse für ein Fahrzeug oder ein Fahrzeug mit der Achse, wobei die Achse zwei der Radnabenantriebe aufweist, wie diese zuvor beschrieben wurde. Es kann vorgesehen sein, dass die Feststellbetätigungseinrichtung als eine gemeinsame Feststellbetätigungseinrichtung für beide Radnabenantriebe und insbesondere für beide Feststellbremsvorrichtungen der beiden Radnabenantriebe ausgebildet ist.

Weitere Merkmale, Vorteile und Wirkung der Erfindung ergeben sich aus der nachfolgenden Beschreibung von bevorzugten Ausführungsbeispielen der Erfindung sowie der beigefügten Figuren. Diese zeigen:
Figur 1 eine schematische, dreidimensionale Schnittdarstellung von einem Radnabenantrieb als ein Ausführungsbeispiel der Erfindung;
Figuren 2a, b eine dreidimensionale Detailansicht eines stationären und eines verdrehbaren Rampenabschnitts des Radnabenantriebs in der Figur 1;
Figuren 3a, b eine dreidimensionale Ansicht eines Fixierungsabschnitts und eines Gehäusedeckels des Radnabenantriebs in der Figur 1;

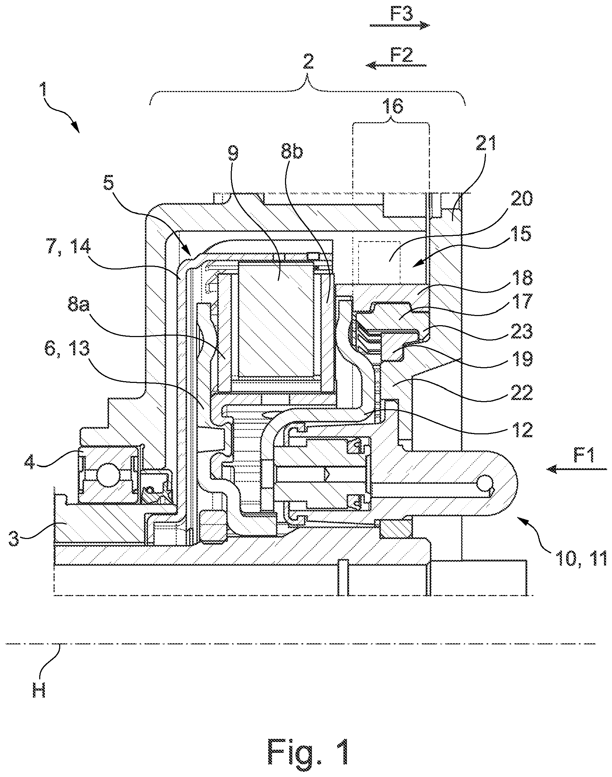

Die Figur 1 zeigt in einer schematischen, dreidimensionalen Schnittdarstellung entlang einer Hauptachse H einen Radnabenantrieb 1 als ein Ausführungsbeispiel der Erfindung. Der Radnabenantrieb 1 ist als ein radselektiver Antriebsmotor für ein angetriebenes Rad eines Fahrzeugs (nicht dargestellt) ausgebildet.

Der Radnabenantrieb 1 weist ein Antriebsgehäuse 2, nur abschnittsweise dargestellt, auf, welches in dem Fahrzeug drehfest aufgenommen ist. Ferner ist ein Nabenabtrieb 3 koaxial zu der Hauptachse H vorgesehen, wobei der Nabenabtrieb 3 über eine Lagereinrichtung 4 in dem Antriebsgehäuse 2 rotierbar gelagert ist. Beispielsweise ist ein Elektromotor (nicht dargestellt) statorsseitig mit dem Antriebsgehäuse 2 drehfest verbunden und rotorseitig mit dem Nabenabtrieb 3 drehfest verbunden. Der Elektromotor erzeugt ein Antriebsmoment, welches über den Nabenabtrieb 3 zu dem angetriebenen Rad geleitet wird.

In dem Antriebsgehäuse 2 ist eine Radbremsvorrichtung 5 angeordnet, insbesondere integriert. Die Radbremsvorrichtung 5 weist einen Innenträger 6 und einen Außenträger 7 auf. Der Innenträger 6 ist bei diesem Ausführungsbeispiel als eine Blechkonstruktion ausgebildet, welche drehfest mit dem Antriebsgehäuse 3 gekoppelt ist. An dem Innenträger 6 sind zwei Bremsbeläge 8a, b axial relativ zueinander verschiebbar angeordnet. An dem Außenträger 7 ist eine Bremsscheibe 9 vorzugsweise axial verschiebbar zwischen den zwei Bremsbelägen 8a, b angeordnet und in Umlaufrichtung um die Hauptachse H drehfest und/oder formschlüssig eingesetzt.

Die Radbremsvorrichtung 5 weist eine Radbremsbetätigungseinrichtung 10 auf, welche als eine hydraulische Radbremsaktorik ausgebildet ist. Die Radbremsbetätigungseinrichtung 10 weist mindestens einen hydraulischen Radbremsaktor 11 als Radbremsbetätigungseinrichtung 10 auf, welcher in axialer Richtung wirkt und einen zylinderförmigen Drucktopf 12 in axialer Richtung mit einer Bremskraft F1 beaufschlagt. Bei einer Betätigung der Radbremsbetätigungseinrichtung 10 wird der Drucktopf 12 in axialer Richtung verschoben, um die beiden Bremsbeläge 8a, b und die Bremsscheibe 9 in axialer Richtung zusammenzudrücken, so dass ein Bremsmoment erzeugt wird.

In dieser Ausgestaltung bildet der Innenträger 6 mit den beiden Bremsbelägen 8a, b einen stationären Bremspartner 13 und der Außenträger 7 mit der Bremsscheibe 9 einen rotierenden Bremspartner 14.

Ferner ist in dem Antriebsgehäuse 2 eine Feststellbremsvorrichtung 15 angeordnet, wobei die Feststellbremsvorrichtung 15 einen Rampenmechanismus 16 zur Umwandlung einer Rotationsbewegung um die Hauptachse H in eine Linearbewegung entlang der Hauptachse H aufweist. Hierzu weist der Rampenmechanismus 16 einen stationären Rampenabschnitt 17 und einen verdrehbaren Rampenabschnitt 18 auf, welcher zur Umsetzung der Rotationsbewegung relativ zu dem stationären Rampenabschnitt 17 um die Hauptachse H verdrehbar ist. Die beiden Rampenabschnitte 17, 18 sind jeweils ringförmig ausgebildet und in Bezug auf die Hauptachse H koaxial und/oder konzentrisch zueinander angeordnet. Der stationäre Rampenabschnitt 17 ist radial in dem verdrehbaren Rampenabschnitt 18 angeordnet, und steht über den Rampenmechanismus 15 derart mit dem stationären Rampenabschnitt 17 in Wirkverbindung, sodass bei einer Verdrehung des Rampenabschnitts 18 dieser in axialer Richtung in Bezug auf die Hauptachse H die Linearbewegung ausführt. Die Bremsbeläge 8a, b werden dabei mit einer Feststellkraft F2 beaufschlagt und mit der Bremsscheibe 9 zusammengepresst, so dass ein Feststellmoment erzeugt wird.

Die Feststellbremsvorrichtung 15 weist eine separate Feststellbetätigungseinrichtung 20 (schematisch angedeutet) auf, wobei die Feststellbetätigungseinrichtung 20 zur Erzeugung und/oder Übertragung der Rotationsbewegung ausgebildet ist und mit dem verdrehbaren Rampenabschnitt 18 antriebstechnisch und/oder getriebetechnisch in Verbindung steht. Beispielsweise kann die Feststellbetätigungseinrichtung 20 als ein Seilzug, ein Schneckengetriebe oder eine hydraulische Betätigungsaktorik, z. B. ein hydraulischer Zylinder, ausgebildet sein. Der verdrehbare Rampenabschnitt 18 ist in axialer Richtung in Bezug auf die Hauptachse H sowohl über den Drucktopf 12 an dem Bremsbelag 8b abgestützt. Zum Feststellen des Fahrzeugrads wird der verdrehbare Rampenabschnitt 18 mit Hilfe der Feststellbetätigungseinrichtung 20 rotiert, wobei durch den Rampenmechanismus 16 der verdrehbare Rampenabschnitt 18 zugleich axial bewegt und somit der Drucktopf 12 unabhängig von der Radbremsbetätigungseinrichtung 10 durch die Feststellbetätigungseinrichtung 15 betätigt werden kann. Mit diesem Aufbau sind die Radbremsbetätigungseinrichtung 10 und die Feststellbetätigungseinrichtung 15 unabhängig voneinander betätigbar. In einem üblichen Betrieb wird die Radbremsbetätigungseinrichtung 10 genutzt, um das angetriebene Rad 2 beim Fahren des Fahrzeugs abzubremsen. Dagegen wird die Feststellbetätigungseinrichtung 15 genutzt, um das angetriebene Rad 2 beim Parken des Fahrzeugs festzustellen.

Der stationäre Rampenabschnitt 17 ist über einen ringförmigen Fixierungsabschnitt 19 mit dem Antriebsgehäuse 2 verbunden. Das Antriebsgehäuse 2 weist einen Gehäusedeckel 21 auf, welcher das Antriebsgehäuse 2 in axialer Richtung in Bezug auf die Hauptachse H abschließt. Der Fixierungsabschnitt 19 ist koaxial zu der Hauptachse H angeordnet und fest mit dem Gehäusedeckel 21 verbunden. Hierzu weißt der Gehäusedeckel 21 einen Aufnahmeabschnitt 22 auf, welcher in dem gezeigten Ausführungsbeispiel als ein zylindrischer Ansatz ausgebildet ist. Der Fixierungsabschnitt 19 ist auf dem Aufnahmeabschnitt 22 formschlüssig aufgenommen und beispielsweise über eine Schraubverbindung mit dem Gehäusedeckel 21 verbunden. Zusätzlich weißt der verdrehbare Rampenabschnitt 17 einen radial nach innen gerichteten Bundabschnitt 23 auf, wobei der Bundabschnitt 23 in axialer Richtung in Bezug auf die Hauptachse H zwischen dem Fixierungsabschnitt 19 und dem Gehäusedeckel 21 formschlüssig gehalten ist. Somit wird zusätzlich eine axiale Sicherung des stationären Rampenabschnitts 17 umgesetzt.

Des Weiteren kann die Feststellbremsvorrichtung 15 zur Verschleißnachstellung der Radbremsvorrichtung 5 dienen. Hierzu kann der verdrehbare Rampenabschnitt 18 durch die Feststellbetätigungseinrichtung 20 und den Rampenmechanismus 16 axial genau positioniert werden, wobei der Rampenabschnitt 18 gleichzeitig als Auflagefläche für den Drucktopf 12 dient. Somit wird ein axialer Endanschlag für den Drucktopf 12 gebildet, wobei der Drucktopf 12 in einem geöffneten Zustand der Radbremsvorrichtung 5 und der Feststellbremsvorrichtung 15 an dem Endschlag anliegt. Dieser durch den Rampenabschnitt 18 gebildete Endschlag bzw. die genaue axiale Position des Rampenabschnitts 18 kann zur Einstellung der Verschleißnachstellung in der Feststellbremsvorrichtung 15 gespeichert werden, wenn die Feststellbetätigungseinrichtung 20 selbsthemmend ist. Beispielsweise ist ein Rückstellelement, wie z.B. eine Tellerfeder oder ein Druckfederpaket, zur Erzeugung einer Rückstellkraft F3 vorgesehen, um den Drucktopf 12 in Richtung des durch den stationären Rampenabschnitt 23 gebildeten Endanschlags zurückzuschieben. Damit wird sichergestellt, dass die Radbremsvorrichtung 5 sich nach der Betätigung wieder komplett öffnet.

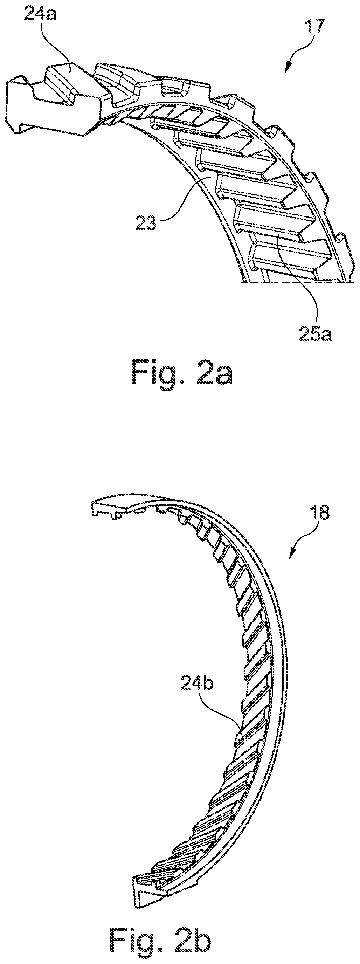

Die Figur 2a zeigt in einer perspektivischen Detailansicht den stationären Rampenabschnitt 17. Die Figur 2b zeigt in einer perspektivischen Detailansicht den verdrehbaren Rampenabschnitt 18. Die beiden Rampenabschnitte 17, 18 sind jeweils als ein Zahnring ausgebildet. Zur Bildung des Rampenmechanismus 16, wie in Figur 1 gezeigt, weist der stationäre Rampenabschnitt 17 an seinem Außenumfang und der verdrehbare Rampenabschnitt 18 an seinem Innenumfang jeweils eine Schrägverzahnung 24a, b auf, wobei die beiden Rampenabschnitte 17, 18 jeweils über die Schrägverzahnung 24a, b miteinander in Eingriff stehen. Die Schrägverzahnungen 24a, b sind jeweils durch schräg zu der Hauptachse H verlaufende Nuten und Stege gebildet, welche sich in abwechselnder Reihenfolge umlaufend um die Hauptachse H erstrecken. Bei einer Relativverdrehung der beiden Rampenabschnitte 17, 18, gleiten die beiden Rampenabschnitte 17, 18 über die Schrägverzahnung 24a, b aneinander ab, sodass eine axiale Verschiebung der beiden Rampenabschnitte 17, 18 gegeneinander erfolgt. Diese Linearbewegung wird, wie in Figur 1 dargestellt, verwendet um die Bremsbeläge 8a, b mit der Bremsscheibe 9 zusammenzupressen und das Rad festzustellen.

Es wird somit eine Feststellbremsvorrichtung 15, welche durch einen geringen Kraftaufwand betätigbar ist, wobei die Feststellkraft F2 durch den Rampenmechanismus 16verstärkt auf die Radbremsvorrichtung 5 übertragen werden kann. Dadurch kann in einfacher Weise eine robuste Feststellbremsvorrichtung 15 realisiert werden, welche zudem einfach und kostengünstig hergestellt werden kann.

Der stationäre Rampenabschnitt 17 weist an seinem Innenumfang eine Geradverzahnung 25a auf, welche zur drehfesten Verbindung mit dem Fixierungsabschnitt 19 dient. Die Geradverzahnung 25a ist durch mehrere parallel zu der Hauptachse H und in abwechselnder Anordnung verlaufende Nuten und Stege gebildet. Die Geradverzahnung 25a schließt sich dabei unmittelbar an den radial nach innen gerichteten Bund 23 an.

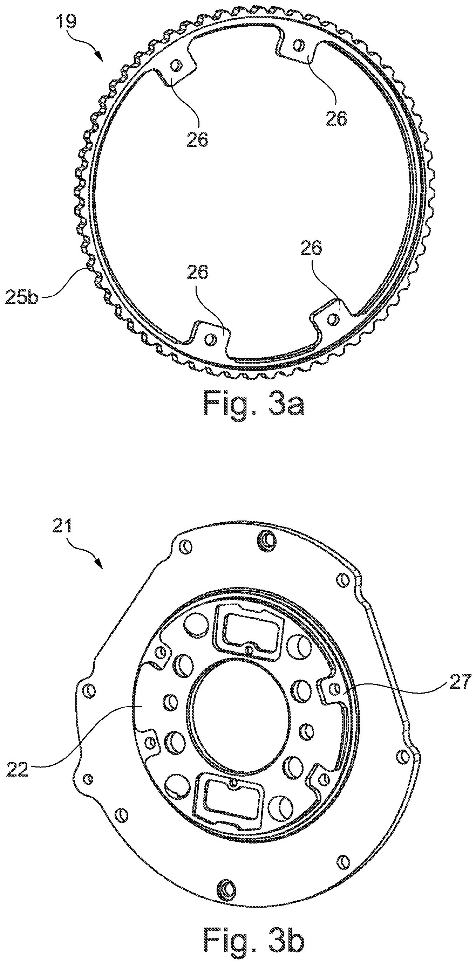

Figur 3a zeigt in einer dreidimensionalen Darstellung den Fixierungsabschnitt 19 und Figur 3b den Gehäusedeckel 21. Der Fixierungsabschnitt 19 ist als ein weiterer Zahnring ausgebildet. Der Fixierungsabschnitt 19 weist an seinem Außenumfang eine zu der Geradverzahnung 25a korrespondierende Geradverzahnung 25b auf, wobei die Geradverzahnung 25a des stationären Rampenabschnitts 17 und die Geradverzahnung 25b des Fixierungsabschnitts 19 gemeinsam eine Steckverzahnung bilden. Zur Montage kann der stationären Rampenabschnitt 17 mit seiner Geradverzahnung 25a auf die Geradverzahnung 25b des Fixierungsabschnitts 19 in axialer Richtung in Bezug auf die Hauptachse H aufgesteckt werden. Dabei kann der stationäre Rampenabschnitt 17 so weit auf den Fixierungsabschnitt 19 aufgeschoben werden, bis der der Rampenabschnitt 17 mit seinem Bund 23 an einer Stirnseite des Fixierungsabschnitts 19 anliegt. Anschließend kann der Fixierungsabschnitt 19 zusammen mit dem vormontierten Rampenabschnitt 17 an dem Gehäusedeckel 21 montiert werden. Optional kann vorgesehen, sein dass der verdrehbare Rampenabschnitt 18 ebenfalls bereits auf dem stationären Rampenabschnitt 17 vormontiert ist. In einem montierten Zustand ist somit der stationäre Rampenabschnitt 17 in axialer Richtung in Bezug auf die Hauptachse H durch den Bundabschnitt 23 und in Umlaufrichtung durch die Geradverzahnung 25a, b an dem Antriebsgehäuse 2, insbesondere dem Gehäusedeckel 21 fixiert.

Der Fixierungsabschnitt 19 weist mehrere radial nach innen gerichtete Befestigungslaschen 26 auf, wobei jede der Befestigungslaschen 26 zur Aufnahme eines Befestigungsmittels, z.B. Schraube, dient. Der Aufnahmeabschnitt 22 bildet einen Konturpartner zu dem Fixierungsabschnitt 19, wobei der Aufnahmeabschnitt 22 hierzu eine Negativkontur 27 aufweist. Bei einer Montage wird der Fixierungsabschnitt 19 auf den Aufnahmeabschnitt 22 formschlüssig in die Negativkontur 27 eingesetzt. Anschließend wird der Fixierungsabschnitt 19 über die Befestigungsmittel an dem Gehäusedeckel 21 fixiert, sodass der Fixierungsabschnitt 19, insbesondere zusammen mit dem stationären und optional dem verdrehbaren Rampenabschnitt 17, 18, verliersicher gehalten ist.

### Bezugszeichenliste

- 1: Radnabenantrieb
- 2: Antriebsgehäuse
- 3: Nabenabtrieb
- 4: Lagereinrichtung
- 5: Radbremsvorrichtung
- 6: Innenträger
- 7: Außenträger
- 8a,b: Bremsbeläge
- 9: Bremsscheibe
- 10: Radbremsbetätigungseinrichtung
- 11: hydraulischer Radbremsaktor
- 12: Drucktopf
- 13: rotierende Bremspartner
- 14: rotierender Bremspartner
- 15: Feststellbremsvorrichtung
- 16: Rampenmechanismus
- 17: stationärer Rampenabschnitt
- 18: verdrehbarer Rampenabschnitt
- 19: Fixierungsabschnitt
- 20: Feststellbetätigungseinrichtung
- 21: Deckelgehäuse
- 22: Zylinderabschnitt
- 23: Bund
- 24a,b: Schrägverzahnung
- 25a,b: Geradverzahnung
- 26: Befestigungslaschen
- 27: Negativkontur
- F1: Bremskraft
- F2: Feststellkraft
- F3: Rückstellkraft
- H: Hauptachse

## Patentansprüche

1. Radnabenantrieb (1) für ein Fahrzeug
mit einem Antriebsgehäuse (2),
mit einem Nabenabtrieb (3) zur Kopplung mit einem angetriebenen Rad, wobei der Nabenabtrieb (3) relativ zu dem Antriebsgehäuse (2) rotierbar gelagert ist,
mit einer Radbremsvorrichtung (5) zum Abbremsen des Nabenabtriebs (4) relativ zu dem Antriebsgehäuse (2), wobei die Radbremsvorrichtung (5) einen stationären und einen rotierenden Bremspartner (13, 14) aufweist, wobei der stationäre Bremspartner (13) mit dem Antriebsgehäuse (2) drehfest und der rotierende Bremspartner (14) mit dem Nabenabtrieb (3) getrieblich und/oder drehfest verbunden ist, wobei der stationäre und der rotierende Bremspartner (13, 14) bei einer Betätigung der Radbremsvorrichtung (5) relativ zueinander bewegbar sind und in einem Bremszustand reibschlüssig miteinander verbunden sind,
mit einer Feststellbremsvorrichtung (15) zum Feststellen des Nabenabtriebs (3) relativ zu dem Antriebsgehäuse (2), wobei der stationäre und der rotierende Bremspartner (13, 14) bei einer Betätigung der Feststellbremsvorrichtung (15) relativ zueinander bewegbar sind und in einem Feststellzustand reibschlüssig miteinander verbunden sind,
wobei
die Feststellbremsvorrichtung (15) einen Rampenmechanismus (16) aufweist, wobei der Rampenmechanismus (16) zur Übertragung einer Feststellkraft (F2) auf den stationären und/oder den rotierenden Bremspartner (13, 14) eine Rotationsbewegung in eine Linearbewegung umwandelt und wobeider Rampenmechanismus (16) einen stationären und einen verdrehbaren Rampenabschnitt (17, 18) aufweist, wobei der stationäre Rampenabschnitt (17) zumindest drehfest mit dem Antriebsgehäuse (2) verbunden ist und/oder durch dieses gebildet ist, und wobei der verdrehbare Rampenabschnitt (18) zur Umsetzung der Rotationsbewegung um eine Hauptachse (H) verdrehbar ist, wobei bei einer Verdrehung des verdrehbaren Rampenabschnitts (18) die Linearbewegung über den Rampenmechanismus (16) auf mindestens einen der beiden Rampenabschnitte (17, 18) übertragbar ist,
**dadurch gekennzeichnet, dass** einer der beiden Rampenabschnitte (17, 18) an seinem Innenumfang und der andere der beiden Rampenabschnitte (17, 18) an seinem Außenumfang jeweils eine Schrägverzahnung (24a, b) aufweist, wobei die beiden Rampenabschnitte (17, 18) zur Bildung des Rampenmechanismus (16) über die Schrägverzahnung (24a, b) miteinander in Eingriff stehen.

2. Radnabenantrieb (1) nach Anspruch 1, wobei die Feststellbremsvorrichtung (15) einen Fixierungsabschnitt (19) zur Fixierung des stationären Rampenabschnitts (17) an dem Antriebsgehäuse (2) aufweist, wobei der Fixierungsabschnitt (19) an dem Antriebsgehäuse (2) montiert ist, und wobei der stationäre Rampenabschnitt (17) und der Fixierungsabschnitt (19) jeweils über einen Geradverzahnung (25a) miteinander in Eingriff stehen.

3. Radnabenantrieb (1) nach Anspruch 1 oder 2, wobei die Radbremsvorrichtung (5) einen Drucktopf (12) zur Übertragung einer Bremskraft (F1) aufweist, in axialer Richtung durch mindestens einen der Bremspartner (13, 14) und in axialer Gegenrichtung durch mindestens einen der Rampenabschnitte (17, 18) ein Endanschlag für den Drucktopf (12) definiert ist, wobei eine axiale Position des durch den Rampenabschnitt (17, 18) gebildeten Endanschlags über den Rampenmechanismus (16) einstellbar ist, sodass eine Verschleißnachstellung für die Radbremsvorrichtung (5) umgesetzt ist.

4. Radnabenantrieb (1) nach einem der vorhergehenden Ansprüche, wobei die Radbremsvorrichtung (5) eine Radbremsbetätigungseinrichtung (10) und die Feststellbremsvorrichtung (15) eine Feststellbetätigungseinrichtung (20) aufweist, wobei die Feststellbetätigungseinrichtung (20) unabhängig von der Radbremsbetätigungseinrichtung (10) betätigbar ist.

5. Radnabenantrieb (1) nach Anspruch 4, wobei die Feststellbetätigungseinrichtung (15) als eine manuelle Feststellbetätigungseinrichtung ausgebildet ist.

6. Radnabenantrieb (1) nach Anspruch 4, wobei die Feststellbetätigungseinrichtung (15) eine Feststellaktorik umfasst oder als diese ausgebildet ist.

7. Radnabenantrieb (1) nach einem der vorhergehenden Ansprüche, wobei der stationäre Bremspartner (13) als mindestens ein axial beweglicher Bremsbelag (8a, b) ausgebildet oder diesen umfasst ist und/oder dass der rotierende Bremspartner (14) als mindestens eine axial bewegliche Bremsscheibe (9) ausgebildet ist oder diese umfasst.

8. Achsanordnung für ein Fahrzeug oder Fahrzeug mit der Achsanordnung, umfassend zwei der Radnabenantriebe (1) nach einem der vorhergehenden Ansprüche.

## Claims

1. A wheel hub drive (1) for a vehicle
having a drive housing (2),
having a hub output (3) for coupling to a driven wheel, wherein the hub output (3) is rotatably mounted relative to the drive housing (2),
having a wheel brake device (5) for braking the hub output (4) relative to the drive housing (2), wherein the wheel brake device (5) has a stationary and a rotating brake partner (13, 14), wherein the stationary brake partner (13) is connected to the drive housing (2) in a non-rotatable manner and the rotating brake partner (14) is connected to the hub output (3) in a geared and/or non-rotatable manner, wherein the stationary and the rotating brake partner (13, 14) are movable relative to one another upon actuation of the wheel brake device (5) and are frictionally connected to one another in a braking state,
having a parking brake device (15) for locking the hub output (3) relative to the drive housing (2), wherein the stationary and the rotating brake partners (13, 14) are movable relative to one another upon actuation of the parking brake device (15) and are frictionally connected to one another in a locking state,
wherein
the parking brake device (15) has a ramp mechanism (16), wherein the ramp mechanism (16) converts a rotational movement into a linear movement for transmitting a locking force (F2) to the stationary and/or the rotating brake partner (13, 14), and wherein the ramp mechanism (16) has a stationary and a rotatable ramp section (17, 18), wherein the stationary ramp section (17) is at least connected to the drive housing (2) in a non-rotatable manner and/or is formed by the latter, and wherein the rotatable ramp section (18) is rotatable about a main axis (H) for implementing the rotational movement, wherein upon rotation of the rotatable ramp section (18) the linear movement can be transmitted via the ramp mechanism (16) to at least one of the two ramp sections (17, 18),
**characterized in that** one of the two ramp sections (17, 18) has a helical toothing (24a, b) on its inner circumference and the other of the two ramp sections (17, 18) has a helical toothing on its outer circumference respectively, wherein the two ramp sections (17, 18) are engaged with one another via the helical toothing (24a, b) to form the ramp mechanism (16).

2. The wheel hub drive (1) according to claim 1, wherein the parking brake device (15) has a fixing section (19) for fixing the stationary ramp section (17) to the drive housing (2), wherein the fixing section (19) is mounted on the drive housing (2), and wherein the stationary ramp section (17) and the fixing section (19) are engaged respectively with one another through a spur toothing (25a).

3. The wheel hub drive (1) according to claim 1 or 2, wherein the wheel brake device (5) has a pressure pot (12) for transmitting a braking force (F1), an end stop for the pressure pot (12) is defined in the axial direction by at least one of the brake partners (13, 14) and in the axial opposite direction by at least one of the ramp sections (17, 18), wherein an axial position of the end stop formed by the ramp section (17, 18) is adjustable via the ramp mechanism (16), so that a wear adjustment for the wheel brake device (5) is implemented.

4. The wheel hub drive (1) according to one of the preceding claims, wherein the wheel brake device (5) has a wheel brake actuation device (10) and the parking brake device (15) has a parking lock actuation device (20), wherein the parking lock actuation device (20) can be actuated independently of the wheel brake actuation device (10).

5. The wheel hub drive (1) according to claim 4, wherein the parking lock actuation device (15) is designed as a manual parking lock actuation device.

6. The wheel hub drive (1) according to claim 4, wherein the parking lock actuation device (15) comprises or is designed as a locking actuator.

7. The wheel hub drive (1) according to one of the preceding claims, wherein the stationary brake partner (13) is formed as or comprises at least one axially movable brake pad (8a, b) and/or wherein the rotating brake partner (14) is formed as or comprises at least one axially movable brake disc (9).

8. An axle arrangement for a vehicle or a vehicle with the axle arrangement, comprising two of the wheel hub drives (1) according to one of the preceding claims.

## Revendications

1. Entraînement du moyeu de roue (1) d'un véhicule
comportant un carter d'entraînement (2),
comportant une sortie de moyeu (3) pour l'accouplement à une roue motrice, la sortie de moyeu (3) étant montée rotative par rapport au carter d'entraînement (2),
comportant un dispositif de freinage de roue (5) pour freiner la sortie de moyeu (4) par rapport au carter d'entraînement (2), le dispositif de freinage de roue (5) présentant un partenaire de freinage fixe et un partenaire de freinage rotatif (13, 14), le partenaire de freinage fixe (13) étant solidaire en rotation du carter d'entraînement (2) et le partenaire de freinage rotatif (14) étant engrené et/ou relié solidaire en rotation avec la sortie du moyeu (3), les partenaires de freinage fixe et rotatif (13, 14) étant mobiles l'un par rapport à l'autre lorsque le dispositif de freinage de roue (5) est actionné et sont reliés par friction l'un à l'autre dans un état de freinage, comportant un dispositif de frein de stationnement (15) pour bloquer la sortie de moyeu (3) par rapport au carter d'entraînement (2), dans lequel les partenaires de freinage fixe et rotatif (13, 14) sont mobiles l'un par rapport à l'autre lorsque le dispositif de frein de stationnement (15) est actionné et reliés par friction l'un à l'autre dans un état de verrouillage,
dans lequel
le dispositif de frein de stationnement (15) présente un mécanisme à rampe (16), le mécanisme à rampe (16) convertissant un mouvement de rotation en un mouvement linéaire pour la transmission d'une force de stationnement (F2) au partenaire de freinage fixe et/ou rotatif (13, 14) et le mécanisme à rampe (16) présentant une section de rampe fixe et une section de rampe rotative (17, 18), la section de rampe fixe (17) étant reliée au moins de manière solidaire en rotation au carter d'entraînement (2) et/ou étant formée par lui, et la section de rampe rotative (18) pouvant tourner autour d'un axe principal (H) pour convertir le mouvement de rotation, dans lequel lorsque la section de rampe rotative (18) tourne, le mouvement linéaire peut être transmis par le biais du mécanisme à rampe (16) vers au moins l'une des deux sections de rampe (17, 18),
**caractérisé en ce que** l'une des deux sections de rampe (17, 18) présente un engrenage hélicoïdal (24a, b) sur sa circonférence intérieure et l'autre des deux sections de rampe (17, 18) sur sa circonférence extérieure, les deux sections de rampe (17, 18) étant en prise l'une avec l'autre pour former le mécanisme à rampe (16) par le biais de l'engrenage hélicoïdal (24a, b).

2. Entraînement du moyeu de roue (1) selon la revendication 1, dans lequel le dispositif de frein de stationnement (15) présente une section de fixation (19) pour fixer la section de rampe fixe (17) au carter d'entraînement (2), la section de fixation (19) étant montée sur le carter d'entraînement (2), et la section de rampe fixe (17) et la section de fixation (19) étant en prise l'une avec l'autre respectivement par le biais d'un engrenage droit (25a).

3. Entraînement du moyeu de roue (1) selon la revendication 1 ou 2, dans lequel le dispositif de freinage de roue (5) présente un pot de pression (12) pour transmettre une force de freinage (F1), une butée terminale pour le pot de pression (12) est définie, dans la direction axiale par le biais d'au moins l'un des partenaires de freinage (13, 14) et dans la direction axiale opposée par le biais d'au moins une des sections de rampe (17, 18), une position axiale de la butée terminale formée par la section de rampe (17, 18) étant réglable par le biais du mécanisme à rampe (16), de façon à réaliser un ajustement en fonction de l'usure pour le dispositif de freinage de roue (5).

4. Entraînement du moyeu de roue (1) selon l'une quelconque des revendications précédentes, dans lequel le dispositif de freinage de roue (5) présente un dispositif d'actionnement de freinage de roue (10) et le dispositif de frein de stationnement (15) présente un dispositif d'actionnement de frein de stationnement (20), le dispositif d'actionnement de frein de stationnement (20) pouvant être actionné indépendamment du dispositif d'actionnement de frein de roue (10).

5. Entraînement du moyeu de roue (1) selon la revendication 4, dans lequel le dispositif d'actionnement de frein de stationnement (15) est conçu comme un dispositif d'actionnement de frein de stationnement manuel.

6. Entraînement du moyeu de roue (1) selon la revendication 4, dans lequel le dispositif d'actionnement de frein de stationnement (15) comprend un actionneur de frein de stationnement ou est conçu comme tel.

7. Entraînement du moyeu de roue (1) selon l'une quelconque des revendications précédentes, dans lequel le partenaire de freinage fixe (13) est conçu comme au moins une garniture de frein mobile axialement (8a, b) ou comprend celle-ci et/ou en ce que le partenaire de freinage rotatif (14) est conçu sous la forme d'au moins un disque de frein mobile axialement (9) ou comprend celui-ci.

8. Agencement d'essieux pour un véhicule ou véhicule comportant l'agencement d'essieux, comprenant deux des entraînements du moyeu de roue (1) selon l'une quelconque des revendications précédentes.
